# EUROPÄISCHE PATENTSCHRIFT

(11) **EP 1 002 843 B1**
(45) Veröffentlichungstag und Bekanntmachung des Hinweises auf die Patenterteilung: **05.01.2005**
(21) Anmeldenummer: 99122608.5
(22) Anmeldetag: 13.11.1999
(51) Int. Cl.: C09J 5/06

(54) **Verfahren zum lösbaren Verbinden von Bauteilen**
Method for releasably bonding building elements
Procédé pour lier de manière détachable des éléments de construction

(30) Priorität: 21.11.1998 DE 19853773
(43) Veröffentlichungstag der Anmeldung: 24.05.2000
(73) Patentinhaber: DaimlerChrysler AG, 70567 Stuttgart (DE)
(72) Erfinder: Zimmermann, Werner, 85640 Putzbrunn (DE)

(56) Entgegenhaltungen:
- EP-A- 0 319 023
- EP-A- 0 795 431
- DE-A- 1 604 736
- FR-A- 1 024 256
- GB-A- 2 032 877
- US-A- 2 393 541
- US-A- 3 047 703
- US-A- 3 821 052
- US-A- 5 801 358
- P.SANDERS: "Thermpolaste elektromagnetisch schweissen" PLASTVERARBEITER, Bd. 37, Nr. 7, Juli 1986 (1986-07), Seiten 80-83, XP002156299 SPEYER/RHEIN DE

## Beschreibung

Die Erfindung betrifft ein Verfahren zum lösbaren Verbinden von Bauteilen, wobei mindestens ein Bauteil eine Nut zur Aufnahme eines Klebers aufweist und die Verbindung zwischen dem Bauteil und dem Kleber durch mechanischen Formschluß in der Nut gegeben ist und eine nach dem Verfahren hergestellte lösbare Verbindung.

Der zunehmende Einsatz verschiedenartigster Kunststoffe in vielen Industriebereichen birgt beim Zusammenfügen verschiedenster Komponenten aus unterschiedlichen Materialien große Probleme. So lassen sich bestimmte Kunststoffkombinationen nur kleben, wenn die zu klebenden Oberflächen zuvor aufwendig und unter hohem Kostenaufwand vorbehandelt werden. Bekannt sind auch die Probleme, die am Ende der Lebensdauer entstehen, wenn die Komponenten wieder aufwendig voneinander getrennt werden, um sortenreine Kunststoffe für das Recycling zu erhalten.

Aus DE 4301026 A1 ist ein Verfahren zum lösbaren Verkleben zwischen einem Befestigungsflansch einer Fensteröffnung und einem an einer Fensterscheibe befestigten Profil bekannt, bei dem das Profil einen U-förmigen Querschnitt aufweist, in den der flüssige Kleber mit einem überstehenden und zum Verkleben mit dem Befestigungsflansch dienenden Überschuß eingebracht wird. Die Seitenstege des U-förmigen Abschnitts des Profils sind mit Hinterschneidungen versehen, so daß die Verbindung zwischen Profil und Kleber, die beide keine adhäsive Bindung zueinander eingehen, ausschließlich durch mechanischen Formschluß des ausgehärteten Klebers sichergestellt ist. Die Verbindung kann auch hergestellt werden, indem der Kleber in den durch den Flansch und das Profil gebildeten Hohlraum eingespritzt wird.

Nachteilig wirkt sich bei diesem Verfahren das Hantieren mit flüssigem Kleber aus. Bei zufälligem Verschieben der Bauteile zueinander gerät während des Erhärtens zusätzlich flüssiger Kleber an hierfür nicht vorgesehene Bereiche, was zu Klebeverlusten im U-förmigen Abschnitt und zu Verunreinigungen außerhalb des Klebebereichs führt. Dadurch ist während des Klebevorgangs eine zusätzliche Fixierung der Bauteile untereinander notwendig. Außerdem entsteht bei der Verwendung von flüssigem, heißem Kleber eine starke thermische Belastung der Bauteile, da diese längere Zeit einer erhöhten Temperatur ausgesetzt sind, weil der Kleber solange flüssig sein muß, bis alle U-förmigen Abschnitte gefüllt sind.

In US 3047703 wird ein Verfahren zum lösbaren Verbinden von Bauteilen offenbart, bei welchem mindestens ein Bauteil Nuten zur Aufnahme von Kleber aufweist und die Verbindung zwischen dem Bauteil und dem Kleber durch mechanischen Fonnschluß in der Nut gegeben ist. Die zum Aufschmelzen notwendige Energie wird durch ein elektrisch beheizbares Heizelement zugeführt.

EP 0319023 offenbart einen wieder lösbaren Verschluss für eine Plastiktrommel. Der Verschluss enthält ein thermoplastisches elektromagnetisches Material, das durch Anlegen eines elektromagnetischen Feldes erwärmt werden kann.

US 4339295 offenbart ein Verfahren zur Verbindung von Substraten mittels Hydrogel-Klebstoffen. Die Hydrogele werden auf beide der zu verbindenenden Substrate aufgetragen, die Hydrogelschichten in Kontakt gebracht und hierauf mit Mikrowellen bestrahlt. Je nach Prozesstemperatur und Prozessdruck kann die Verbindung permanent oder temporär und durch Wasser auflösbar sein.

Die Aufgabe der vorliegenden Erfindung ist es, ein Verfahren zum lösbaren Verbinden von verschiedenen Bauteilen anzugeben, das ein einfacheres Hantieren mit dem Kleber ermöglicht und das eine zusätzliche Fixierung der Bauteile untereinander überflüssig macht.

Die Aufgabe wird gelöst durch ein Verfahren zum lösbaren Verbinden von Bauteilen mit den Merkmalen des Anspruchs 1 und einer lösbaren Verbindung zwischen zwei Bauteilen mit den Merkmalen des Anspruchs 6.

Beim Aufschmelzen wird der Kleber flüssig und verteilt sich in der Nut, die er beim Erkalten vollständig füllt, so daß die Verbindung beim Erkalten des Klebers durch mechanischen Formschluß an den Hinterschneidungen gegeben ist. Ist bei allen zu verbindenden Bauteilen die Verbindung durch mechanischen Formschluß mit dem Kleber erwünscht, weisen alle eine Nut mit Hinterschneidungen auf. Es können auch Umstände vorliegen, die es notwendig machen, daß ein Bauteil verklebt wird, so daß der verwendete Kleber eine adhäsive Bindung mit diesem Bauteil eingeht, die restlichen Bauteile aber nur über den angesprochenen mechanischen Formschluß mit dem Kleber verbunden werden, wobei der Kleber keine adhäsive Bindung mit diesen Bauteilen eingeht.

Das erfindungsgemäße Verfahren ermöglicht einen vereinfachten Umgang mit dem Kleber, da dieser im festen Zustand eingebracht wird, was zu keinerlei Verunreinigungen außerhalb des Klebebereichs führt. Hinzu kommt, daß durch geeignete Wahl der äußeren Form des Klebers die zu verbindenden Bauteile während des Verbindungsvorganges untereinander fixiert werden und nur beim Erreichen des Schmelzpunktes leicht zusammengepreßt werden müssen. Außerdem ist die thermische Belastung der Bauteile gering, da die gesamte Nut mit kaltem, festem Kleber gefüllt wird und eine nachgeschaltete Erwärmung, d. h. eine Verflüssigung, kurzfristig auf den gesamten Kleber angewendet wird, so daß die zu verbindenden Bauteile nur kurze Zeit einer erhöhten Temperatur ausgesetzt sind.

Bedingt durch die Form der Nut wird der Kleber bevorzugt in Stab- oder Drahtform in die Nut eingebracht. Bei überwiegend gerade ausgebildeten Nuten sind stabförmige Kleberstücke, die auf die Länge der Nuten abgelängt sind das Material der Wahl. Sind in den zu verbindenden Bauteilen keine geradlinigen Nuten vorhanden, ist die Verwendung von biegeelastischem, drahtförmigem Kleber von Vorteil, der sich dem Verlauf der Nuten anpaßt.

Bevorzugt wird der mechanische Formschluß zwischen dem Kleber und der Nut durch Hinterschneidungen und/oder Verankerungsvorsprünge in der Nut durchgeführt. Hierdurch kann der mechanische Formschluß in seiner Stärke gesteuert werden, da durch die Anzahl der Hinterschneidungen und die Wahl ihrer Form Einfluß darauf genommen werden kann, welche Kraft aufgewendet werden muß, um die Verbindung zu trennen.

Vorzugsweise wird als Kleber ein Thermoplast eingesetzt. Thermoplaste sind für niedrige Schmelztemperatur bekannt, so daß beim Schmelzen des Thermoplasten und beim Füllen der Nut die thermische Belastung der Bauteile gering gehalten wird. Außerdem sind die Verarbeitungsmöglichkeiten von Thermoplasten sehr einfach, so daß sie ohne Aufwand in Stab- oder Drahtform gebracht werden können. Beim nochmaligen Erwärmen nach dem Verbinden schmelzen Thermoplaste wieder, so daß die Verbindung dadurch sehr leicht wieder gelöst werden kann. Ist der Thermoplast nach dem Erhärten sehr elastisch, ist es möglich, diesen an einer speziell dafür vorgesehenen Stelle aus der Nut herauszuziehen, so daß die Verbindung auf diese Weise gelöst werden kann.

Besonders vorteilhaft ist der Einsatz von mikrowellenabsorbierendem Kleber oder die Verwendung eines leitfähigen Polymers als Kleber. Hierbei wird das Aufschmelzen des Klebers durch Mikrowelleneinstrahlung durchgeführt. Bei einem derartigen Verfahren ist die thermische Belastung der zu klebenden Bauteile minimal, da durch die ausschließliche Erwärmung des Klebers durch Mikrowelleneinstrahlung die Bauteile für die Verflüssigung des Klebers nicht mit erwärmt werden müssen. Außerdem ist der gezielte Einsatz von Mikrowellen möglich, wenn Umstände vorliegen, die ein sequentielles Verkleben der Bauteile notwendig machen.

Mikrowellenabsorbierende Kleber werden bevorzugt über den Einsatz von Mikrowellen absorbierenden Füllstoffen in nicht absorbierenden Klebern realisiert. Hierbei handelt es sich vorzugsweise um Carbonyleisen, Nickelpulver oder Ruß. Hierdurch lassen sich auf einfache Weise aus nicht absorbierenden Klebern durch Zumengen der Füllstoffe absorbierende Kleber herstellen. Dies ist vor allem dann von Vorteil, wenn die Verbindung von bestimmten Bauteilen nur über nicht absorbierende Kleber realisiert werden kann, da andere Kleber nicht infrage kommen, die thermische Belastung der Bauteile aber niedrig sein muß, so daß das Aufschmelzen des Klebers über Mikrowelleneinstrahlung durchgeführt werden soll. Auf diese Weise wird das Verfahren für alle individuellen Kleber-Bauteil-Kombinationen einsetzbar.

Die Erfindung wird im folgenden anhand eines in Zeichnungen dargestellten Ausführungsbeispiels näher beschrieben, aus dem sich weitere Einzelheiten, Merkmale und Vorzüge ergeben.
Es zeigt,
**Figur 1** einen Schnitt durch zwei zu verklebende Bauteile vor dem Durchführen des Verfahrens zum lösbaren Verbinden durch Einsatz von Mikrowellen.
**Figur 2** einen Schnitt durch selbige Bauteile nach dem Aufschmelzen des Klebers.
Bei der in Figur 1 gezeigten Anordnung handelt es sich um eine Ausführungsform des erfindungsgemäßen Verfahrens, bei dem das Aufschmelzen des Klebers durch Mikrowellen durchgeführt wird.
Die beiden zu verbindenden Bauteile 10, 20 weisen an den miteinander zu verbindenden Flächen 12, 22 Nuten 11, 21 auf, die mit Hinterschneidungen ausgestattet sind. Die Nuten 11, 21 liegen einander gegenüber. In den dadurch gebildeten Raum wird der stabförmige Kleber 40 eingebracht. Der Kleber 40, ein mit Nickelpulver versehenes Thermoplast, absorbiert Mikrowellen und kann somit aufgeheizt und aufgeschmolzen werden. Der Bereich der Bauteile 10, 20, der die Nuten 11, 21 mit dem Kleber 40 aufweist, befindet sich in einem Mikrowellen-Hohlleiter 30. Über diesen Mikrowellen-Hohlleiter 30 werden Mikrowellen auf den Kleber 40 eingestrahlt. Dadurch wird der Kleber 40 aufgeheizt und nach dem Erreichen des Schmelzpunktes flüssig, so daß er sich in dem durch die beiden Nuten 11, gebildeten Raum ausbreitet. Dabei werden die beiden Bauteile 10, 20 leicht zusammengepreßt. Danach wird die Mikrowelleneinstrahlung beendet, wodurch der Kleber 40 erkaltet und die Verbindung hergestellt wird.

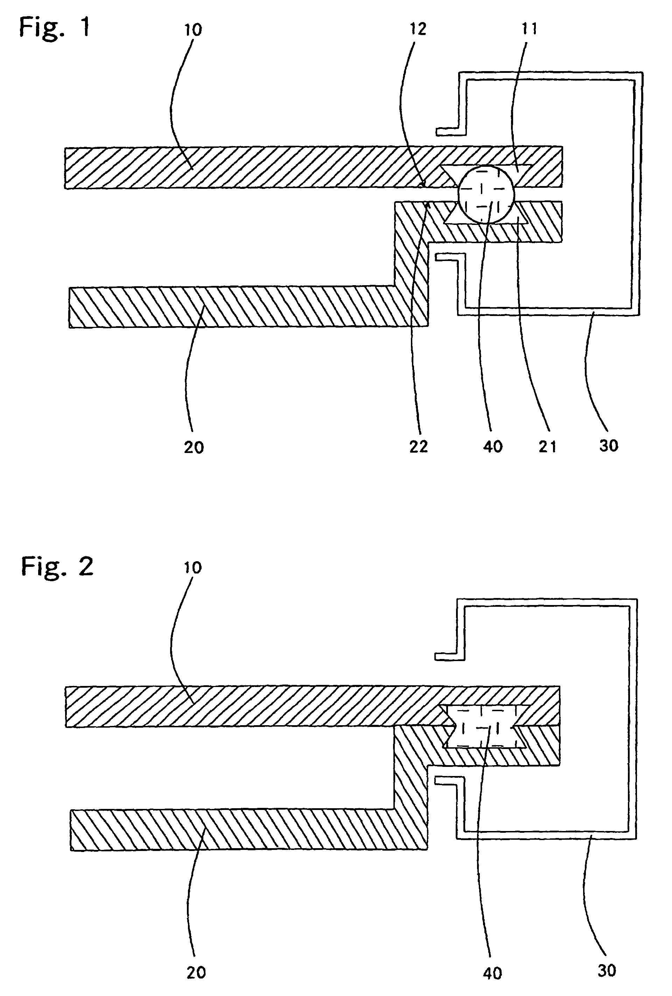

Figur 2 zeigt die verbundenen Bauteile 10, 20, bei denen die Verbindung zwischen dem Kleber 40 und den Bauteilen 10, 20 durch mechanischen Formschluß mit den Hinterschneidungen der Nuten 11, 21 gegeben ist. Da der Kleber 40 und die Bauteile 10, 20 keine adhäsive Bindung zueinander aufweisen, ist die Verbindung leicht zu lösen, indem der Kleber 40 mittels Mikrowelleneinstrahlung wieder verflüssigt wird, wodurch beide Bauteile 10, 20 getrennt werden können.

Natürlich kann der Kleber 40 auch in einer Richtung längs der Nut herausgezogen werden, da er keine adhäsive Bindung zu den Bauteilen 10, 20 aufweist, wodurch die Verbindung der Bauteile ebenfalls gelöst wird.

In dem hier dargestellten Ausführungsbeispiel wird die Verbindung beider Bauteile mit dem Kleber über mechanischen Formschluß bewerkstelligt. Es sind aber auch lösbare Verbindungen möglich, bei denen nur ein Bauteil eine Nut aufweist, in der Hinterschneidungen zu einem mechanischen Formschluß führen und das andere Bauteil an der zu verbindenden Fläche eine adhäsive Bindung mit dem Kleber eingeht. Die Lösung der Verbindung geschieht hier über Aufheizen des Klebers über den Schmelzpunkt.

## Patentansprüche

1. Verfahren zum lösbaren Verbinden von Bauteilen (10, 20) mit Nuten (11, 21), welche mit Hinterschneidungen und/oder Verankerungsvorsprüngen in der Nut ausgestattet sind, zur Aufnahme eines durch Mikrowelleneinstrahlung aufschmelzbaren festen Klebers (40), wobei zur Verklebung der feste Kleber (40) in der Weise zwischen die beiden Nuten (11, 21) mit Hinterschneidungen und/oder Verankerungsvorsprüngen in der Nut eingebracht wird, dass die zu verbindenden Bauteile (10, 20) während des Verbindungsvorganges durch den Kleber (40) fixiert werden und darauf der Kleber (40) durch Mikrowelleneinstrahlung aufgeschmolzen wird, so dass die Verbindung zwischen den Bauteilen und dem Kleber (40) durch mechanischen Formschluß in den Nuten (11, 21) gegeben ist.

2. Verfahren nach Anspruch 1,
**dadurch gekennzeichnet,**
**dass** der Kleber in Stab- oder in Drahtform eingebracht wird.

3. Verfahren nach einem der vorangegangenen Ansprüche,
**dadurch gekennzeichnet,**
**dass** der Kleber ein leitfähiges Polymer oder ein durch den Einsatz von mikrowellenabsorbierenden Füllstoffen mikrowellenabsorbierend gemachter Kleber ist.

4. Verfahren nach Anspruch 3,
**dadurch gekennzeichnet,**
**dass** als Füllstoffe Carbonyleisen und/oder Nickelpulver und/oder Ruß verwendet werden.

5. Lösbare Verbindung zwischen zwei Bauteilen (10, 20) mit Nuten (11, 21) enthaltend einen aufschmelzbaren Kleber (40), wobei die Verbindung zwischen den Bauteilen (10, 20) und dem Kleber (40) durch mechanischen Formschluss in der Nut gegeben ist, wobei beide Bauteile (10, 20) an der Verbindung je eine Nut (11, 21) aufweisen, **dadurch gekennzeichnet,**
**dass** die Nuten (11, 21) mit Hinterschneidungen und/oder Verankerungsvorsprüngen in der Nut ausgestattet sind und dass der Kleber mikrowellenabsorbierend und die Verbindung durch Mikrowelleneinstrahlung aufschmelzbar und lösbar ist.

## Claims

1. Method for releasably bonding component parts (10, 20) with grooves (11, 21), which are provided with undercuts and/or anchoring projections in the groove, for receiving a solid adhesive (40) which can be melted by microwave irradiation, the solid adhesive (40) being introduced between the two grooves (11, 21) with undercuts and/or anchoring projections in the groove in such a way to achieve adhesive bonding that the component parts (10, 20) to be bonded are fixed by the adhesive (40) during the bonding operation and then the adhesive (40) is melted by microwave irradiation, so that the bond between the component parts and the adhesive (40) is provided by mechanical interlocking in the grooves (11, 21).

2. Method according to Claim 1, **characterized in that** the adhesive is introduced in the form of a rod or wire.

3. Method according to one of the preceding claims, **characterized in that** the adhesive is a conductive polymer or an adhesive made to absorb microwaves by the use of microwave-absorbing fillers.

4. Method according to Claim 3, **characterized in that** carbonyl iron and/or nickel powder and/or carbon black are used as fillers.

5. Releasable bond between two component parts (10, 20) with grooves (11, 21) containing a meltable adhesive (40), the bond between the component parts (10, 20) and the adhesive (40) being provided by mechanical interlocking in the groove, the two component parts (10, 20) each having a groove (11, 21) at the bond, **characterized in that** the grooves (11, 21) are provided with undercuts and/or anchoring projections in the groove and **in that** the adhesive absorbs microwaves and the bond can be melted and released by microwave irradiation.

## Revendications

1. Procédé pour lier de manière détachable des éléments de construction (10, 20) ayant des rainures (11, 21), qui sont réalisées avec des contre-dépouilles et/ou des saillies d'ancrage dans la rainure, pour accueillir une colle (40) solide fusible par irradiation par micro-ondes, la colle (40) solide étant appliquée pour le collage entre les deux rainures (11, 21) ayant des contre-dépouilles et/ou des saillies d'ancrage dans la rainure de telle manière que les éléments de construction (10, 20) à lier soient fixés par la colle (40) pendant le processus de liaison et la colle (40) soit ensuite fondue par irradiation par micro-ondes afin que la liaison entre les éléments de construction et la colle (40) soit fournie par liaison de forme mécanique dans les rainures (11, 21).

2. Procédé selon la revendication 1, **caractérisé en ce que** la colle est introduite sous forme de barre ou de fil.

3. Procédé selon une des revendications précédentes, **caractérisé en ce que** la colle est un polymère conducteur ou une colle rendue capable d'absorber les micro-ondes par l'ajout de matières de remplissage capables d'absorber les micro-ondes.

4. Procédé selon la revendication 3, **caractérisé en ce qu'**on utilise comme matières de remplissage du fer-carbonyle et/ou de la poudre de nickel et/ou du noir de carbone.

5. Liaison détachable entre deux éléments de construction (10, 20) ayant des rainures (11, 21) contenant une colle (40) fusible, la liaison entre les éléments de construction (10, 20) et la colle (40) étant fournie par liaison de forme mécanique dans la rainure, les deux éléments de construction (10, 20) présentant chacun une rainure (11, 21) au niveau de la liaison, **caractérisée en ce que** les rainures (11, 21) sont réalisées avec des contre-dépouilles et/ou des saillies d'ancrage dans la rainure et **en ce que** la colle est capable d'absorber les micro-ondes et la liaison est fusible et détachable par irradiation par micro-ondes.
